# EUROPEAN PATENT SPECIFICATION

(11) **EP 2 045 060 B1**
(45) Date of publication and mention of the grant of the patent: **21.12.2011**
(21) Application number: 08163777.9
(22) Date of filing: 05.09.2008
(51) Int. Cl.: B29B 7/74, B29B 7/60, B01F 15/04, F04C 11/00

(54) **Two component metering pump assembly**
Zweikomponenten-Dosierpumpe
Pompe de dosage à deux composants

(30) Priority: 02.10.2007 US 976888 P; 28.07.2008 US 180898
(43) Date of publication of application: 08.04.2009
(73) Proprietor: NORDSON CORPORATION, Westlake, Ohio 44145-1119 (US)
(72) Inventor: Varga, Leslie J., CUMMING, GA 30041 (US)
(74) Representative: Eisenführ, Speiser & Partner

(56) References cited:
- CN-A- 101 413 503
- DE-U1- 9 417 754
- FR-A- 2 654 011
- US-A- 4 090 262
- US-A- 4 200 207
- US-A- 4 931 249

## Description

### Technical Field

This invention relates generally to liquid dispensing systems, and more particularly to a dual-component metering pump assembly driven by a single motor, The invention in particular relates to a metering system according to the preamble of claims 1.

### Background

Various types of pumps, such as piston pumps and gear pumps, have been used in liquid dispensing systems to facilitate the dispensing of liquid material, While the configurations of the pumps themselves is known, there is room for improvement in assembly designs using these pumps in various applications.

In various fields such as the window glazing adhesive market, two or more components must be mixed together in a static mixer or similar device before application to a window. These two components must not interact before delivery to the static mixer, so separate pumps driven by separate motors have generally been used to deliver the two components to the mixer. These separate pumps may be piston pumps, reciprocating pumps, gear pumps, or any other kind of pump. Piston pumps have been very popular in these industries because a piston pump is easily and cheaply acquired in various sizes. The two components mixed in the dispensing system usually have a mix ratio that the pumps have to accurately meet. For example, adhesives used in the window glazing market are two component materials that need to be mixed in ratios of about 1:1 to 10:1, depending on the particular type of adhesive selected. While a mix ratio in the range of about 8:1 to 13:1 can provide acceptable results for the 10:1 adhesive, the more accurate the mix ratio the better the results.

Document FR 2 654 011 A1 discloses a metering system comprising all the features of the preamble of claim 1. A plant is suggested which is characterized in that, in the application to the metering and mixing of at least two components of pasty nature, the feeling means consist of gear pumps.

US 4,931,249 A discloses an apparatus and process for mixing and dispensing high viscosity, multi component reactive liquids into a mold. The apparatus and process are provided for mixing and dispensing high viscosity, multiple component reactive liquids into a mold. The apparatus and process disclosed therein are particularly suitable for mixing and dispensing highly viscous intumescent fireproofing materials. Each reactive liquid component is stored in a separate pressure tank. The liquid components flow through separate conduits leading from each pressure tank, and are metered by a gear pump located in each component conduit. A gear linkage synchronously links the gear pumps together, and a self-locking motor is adapted to drive the linked gear pumps.

Document US 4,090,262 are discloses a mixing and proportioning apparatus for multi-component plastics materials such as polyurethane. The apparatus comprises a number of tanks, a mixing chamber and a separate pipe connecting each tank to the mixing chamber. The tanks are provided with pressurizing means for causing the components to flow through the pipes and each pipe is provided with a metering mechanism to control the flow of the component through it. The metering mechanisms of the different pipes are all positively coupled to each other so that the rates of flow of the components through the pipes are all kept in constant proportions.

Using two motors to drive two separate component pumps requires some an additional metering mechanism to ensure the two components are being delivered at an acceptable ratio. With two motors, two pumps, and a metering mechanism all being used for this one function, an operator will have multiple controls to monitor, including the speed controls of the two motors. The increased complexity of these systems creates more demands on the operator. The potential for error increases because of this increased complexity. More equipment also increases the likelihood of failure of one particular component, thereby bringing the whole system down for repair. Consequently, there is a need for a dispensing system for accurately and efficiently mixing two-component adhesive materials which addresses these and other issues of prior systems.

The invention solves the underlaying problem by providing a metering system according to claim 1.

### Summary

In one illustrative embodiment, a liquid metering system in accordance with the present disclosure includes a first pump, a second pump, a manifold, and a motor. When pumping two-part adhesive, the first pump comprises a first inlet for receiving a first component of the two-part adhesive and a first outlet for delivering the first component to the manifold. The second pump similarly comprises a second inlet for receiving a second component of the two-part adhesive and a second outlet for delivering the second component to the manifold. The manifold communicates with the first and second outlet and includes two manifold outlets for dispensing each of the components into a mixing device such as a static mixer.

### Brief Description of the Drawings

The accompanying drawings, which are incorporated in and constitute a part of this specification, illustrate exemplary embodiments of the invention and, together with a general description of the invention given above, and the detailed description given below, serve to explain the principles of the invention,

FIG. 1A is a side view of a first embodiment of a "double pump" assembly in accordance with the present disclosure.

FIG. 1 B is a front view of the embodiment shown in FIG. 1A.

FIG. 1C is a cross-sectional view of the "double pump" used in the embodiment shown in FIG. 1A.

FIG. 1D is a front view of the embodiment shown in FIG. 1A with component supply lines shown.

FIG. 1E is a cross-sectional view of the "double pump" of FIG. 1C, taken along line 1E-1E.

FIG. 1F is a cross-sectional view of the "double pump" of FIG. 1C, taken along line 1F-1F.

FIG. 2A is a front view of a second embodiment of a pump assembly in accordance with the present disclosure.

FIG. 2B is a detail front view of the embodiment of FIG. 2A, illustrating component flow into the pumps using hidden lines.

FIG. 2C is a detail front view of the embodiment of FIG. 2A, illustrating component flow out of the pumps using hidden lines.

FIG. 2D is a view taken along line 2D-2D of FIG. 2C.

FIG. 3 is a top view of a third embodiment of a pump assembly in accordance with the present disclosure, showing a belt or chain driving two separate gear pump driveshafts.

FIG. 4 is a side view of a fourth embodiment of a pump assembly, similar to FIG. 1A.

### Detailed Description

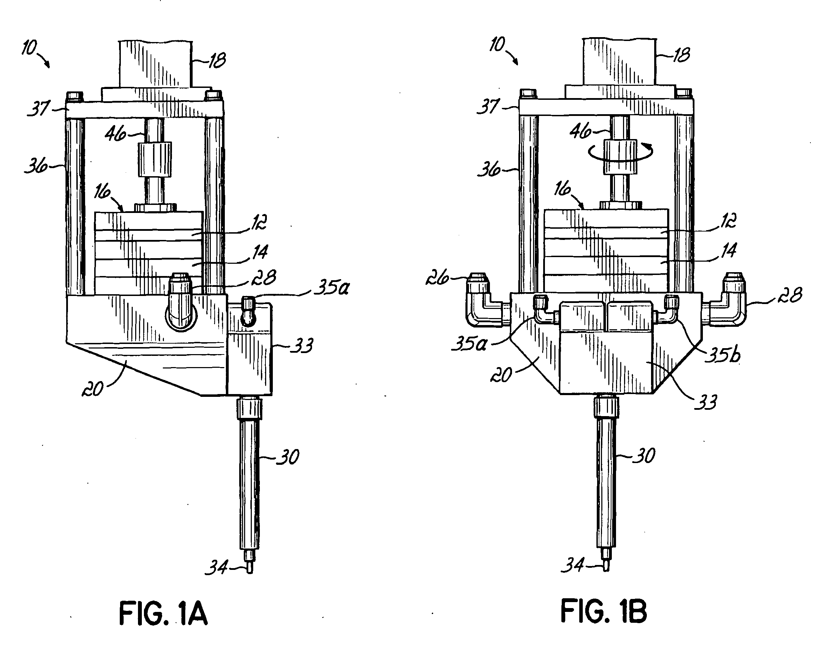

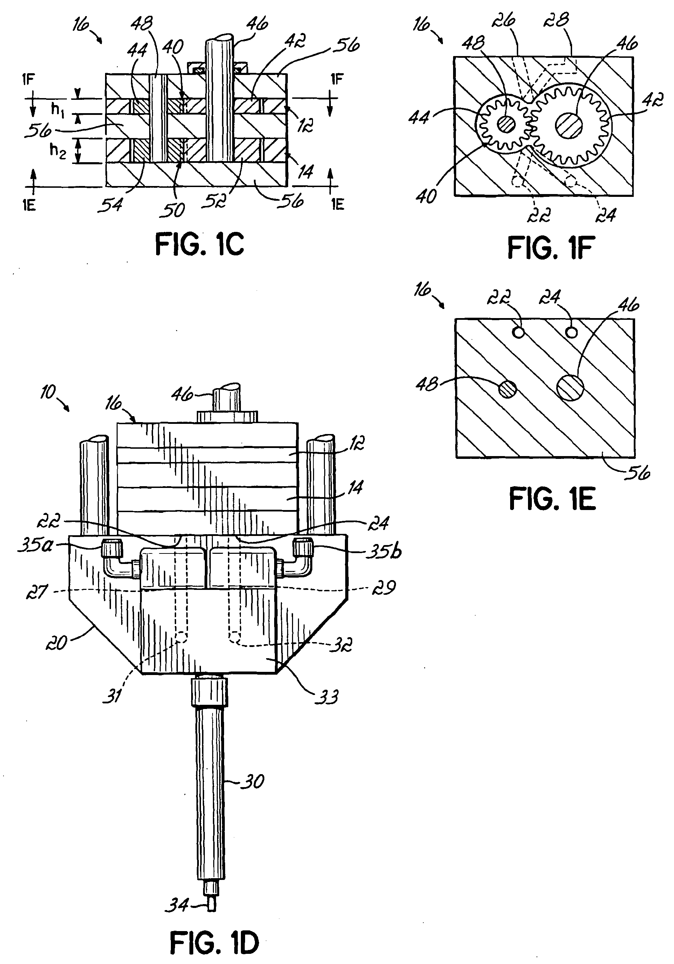

Figs. 1A-1F depict an exemplary embodiment of a liquid metering system 10, configured to meter and mix components of a two-part adhesive. The metering system 10 includes a first pump 12 and a second pump 14 contained within a double pump assembly 16, a single motor 18 (such as a servo motor), and a manifold 20. The manifold 20 communicates with an outlet 22 of the first pump 12 and an outlet 24 of the second pump 14 (FIG. 1D). The first pump 12 has an inlet 26, and the second pump 14 has an inlet 28 (FIG. 1B). Inlets 26, 28 receive the components to be pumped from a source (not shown). The manifold 20 also includes a first manifold outlet 31 and a first passage 27 configured to carry the first component from the outlet 22 of the first pump 12 to the first manifold outlet 31 (FIG. 1D). Similarly, the manifold 20 includes a second manifold outlet 32 and a second passage 29 configured to carry the second component from the outlet 24 of the second pump 14 to the second manifold outlet 32. Each manifold outlet 31, 32 communicates with a static mixer 30, which may be part of a two-component gun 33, such as a two-part dispensing gun, available from Nordson Corporation of Westlake, Ohio. The static mixer 30 combines the two components and dispenses the mixed adhesive through a nozzle tip 34. The two-component gun 33 may include fittings 35a, 35b for coupling the gun 33 to a pressurized air source for operating on/off valves within the gun 33.

The double pump assembly 16 used in this embodiment is shown in greater detail in Figs. 1C, 1E, and 1F. In this embodiment, the first pump 12 and the second pump 14 are gear pumps. The first gear pump 12 includes a first gear train 40 which comprises a drive gear 42 and an idler gear 44, mounted on a driveshaft 46 and an idler shaft 48, respectively. The first gear pump 12 has a case thickness h1 as shown in FIG. 1C. The second gear pump 14 includes a second gear train 50 which comprises a drive gear 52 and an idler gear 54, mounted on the same driveshaft 46 and idler shaft 48, respectively, as the first gear train 40. The second gear pump 14 has a case thickness h2 as shown in FIG. 1C. A plurality of plates 56 covers and seals the two gear pumps 12, 14 with respect to the outside environment and each other.

Referring to Figs. 1A and 1F, when the motor 18 drives the driveshaft 46, the first gear train 40 pumps a volume of the first component from the inlet 26 to the outlet 22 of the first gear pump 12, while the second gear train 50 pumps a volume of the second component from the inlet 28 to the outlet 24 of the second gear pump 14. The first component is then carried through the first passage 27 of the manifold 20 to a first manifold outlet 31 communicating with the static mixer 30. Similarly, the second component is then carried through the second passage 29 of the manifold 20 to a second manifold outlet 32 communicating with the static mixer 30. The static mixer 30 finally combines the two components to create the two-part adhesive.

The relative sizes of the two gear trains 40, 50 determines a fixed speed ratio of the single motor double pump assembly 16. When the drive gears 42, 52 and the idler gears 44, 54 have the same diameters as shown in FIG. 1C, the ratio of case thickness h2/h1 determines the volumetric flow ratio of the two components delivered by the double pump assembly 16. Accordingly, the gear trains 40, 50 can be designed to deliver any desired volumetric ratio of the two components.

The double pump assembly 16 of this embodiment also includes a case 36, as shown in FIGS. 1A-1D, holding the first gear pump 12 and the second gear pump 14 adjacent to each other. The case comprises the manifold 20 as a bottom portion, a top plate 37, and a plurality of rods 39 coupled to the top plate 37 and the manifold 20. The embodiment of FIGS. 1A-1D has the first gear pump 12 and the second gear pump 14 supported on the manifold 20, or bottom portion of the case 36, and the driveshaft 46 extending through the top plate 37 into the motor 18 located above the top plate 37. One skilled in the art will recognize that the case 36 may alternatively comprise various other structure suitable for supporting metering system 10.

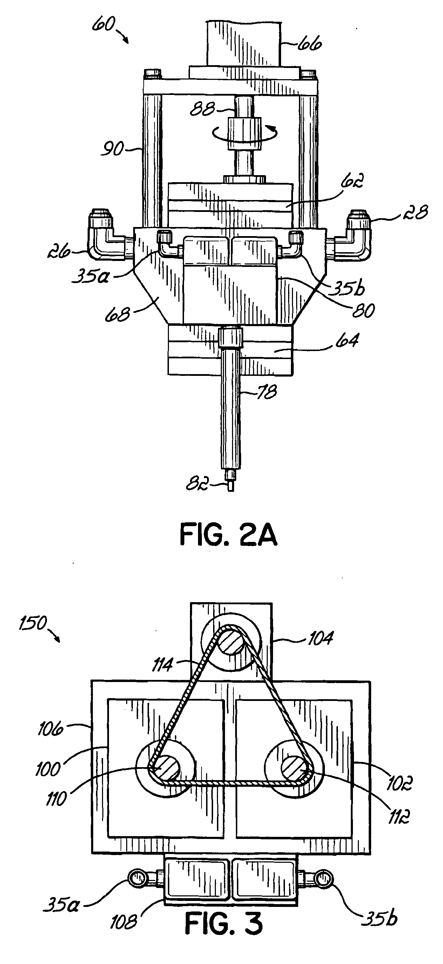

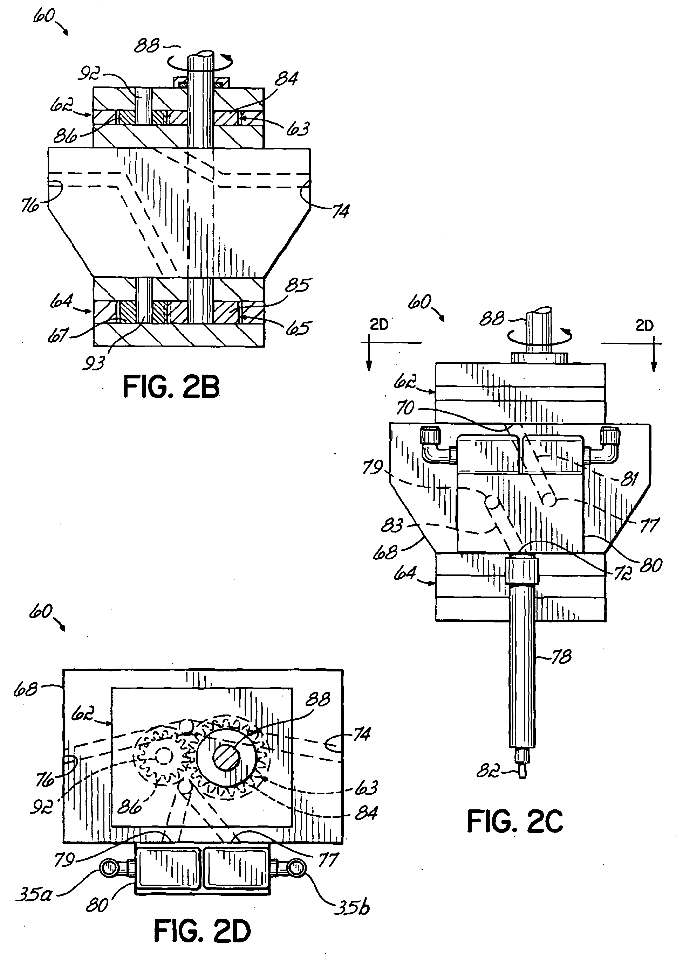

Figs. 2A-2D depict another embodiment of a liquid metering system 60 configured to meter and mix the components of a two-part adhesive. This embodiment differs from the embodiment of FIG. 1A in that the two pumps 62, 64 of this embodiment are not located adjacent to each other, but are spaced apart and positioned on opposite sides of the manifold 68. Mechanically, the embodiments work in the same manner, but separating the pump bodies allows for easier replacement and modification of the two pumps 62, 64 when desired. The metering system 60 includes a first pump 62, a second pump 64, a single motor 66 (such as a servo motor), and a manifold 68. The manifold 68 communicates with an outlet 70 of the first pump 62 and an outlet 72 of the second pump 64. The first pump 62 has an inlet 74, and the second gear pump 64 has an inlet 76. The inlets 74, 76 receive the components from respective sources (not shown). The manifold 68 also includes a first manifold outlet 77 and a first passage 81 configured to carry the first component from the outlet 70 of the first pump 62 to the first manifold outlet 77. Similarly the manifold 68 also includes a second manifold outlet 79 and a second passage 83 designed to carry the second component from the outlet 72 of the second pump 64 to the second manifold outlet 79. Each manifold outlet 77, 79 communicates with a static mixer 78, which may be part of a two-component gun 80. The static mixer 78 combines the two components and dispenses the mixed adhesive at a nozzle tip 82.

In the embodiment shown in FIGS. 2A-2D, the first and second pumps 62, 64 are again depicted as gear pumps, although it will be appreciated that various other types of pumps may alternatively be used. The first gear pump 62 includes a gear train 63 that comprises a drive gear 84 and an idler gear 86, respectively mounted on a driveshaft 88 and an idler shaft 92. The second gear pump 64 includes a gear train 65 comprising a drive gear 85 and an idler gear 67, respectively mounted on the common driveshaft 88 and an idler shaft 93. The two gear pumps 62, 64 are internally coupled in such a way to fix the speed ratio between the pumps 62, 64, and this can be accomplished by driving both pumps 62, 64 with the common driveshaft 88.

The liquid metering system 60 further includes an outer case 90 similar to case 36 of Figs. 1A-1D. One skilled in the art will appreciate that the outer case 90 may alternatively comprise any casing suitable for supporting the pumps 62, 64 and other components of the liquid metering system 60. As described above with respect to the embodiment of Figs. 1A-1F, the pumps 62, 64 operate at a fixed speed ratio in order to pump the components of a two-part adhesive at a desired volumetric flow ratio related to the size of the pumps 62, 64.

Another exemplary embodiment of a liquid metering system 150 is shown in FIG. 3. This embodiment contains all the major structural components of the previously-described embodiments: two gear pumps 100, 102, one motor 104, a manifold 106, and a static mixer within a two-component gun 108. Instead of driving both gear pumps 100, 102 via a common driveshaft, as in other disclosed embodiments, liquid metering system 150 includes separate driveshafts 110, 112 for respective gear pumps 100, 102. Motor 104 drives the driveshafts 110, 112 with a belt or chain 114 as shown in FIG. 3. All other components have the same features and advantages as disclosed in previous embodiments.

Liquid metering systems 10, 60, 150 as shown and described above may be used to mix two-component adhesives, while maintaining a fixed ratio of the two components. In an exemplary application, a liquid metering system 10, 60, 150 as described above may be used to mix adhesive used in window glazing applications. The two components in window glazing adhesive are a base component and a catalyst component. The metering system can then mix the base and catalyst components in any mass ratio desired, typically between a range of about 1:1 to about 10:1 in the window glazing field. Unlike known metering systems with two motors driving respective pumps, no adjustments are necessary due to motor fatigue or replacement because the mass metering of the base and catalyst components occurs automatically in this metering system. A liquid dispensing system in accordance with the present disclosure is therefore well-suited to the exemplary application, as well as various other applications where precise metering of two components is desired.

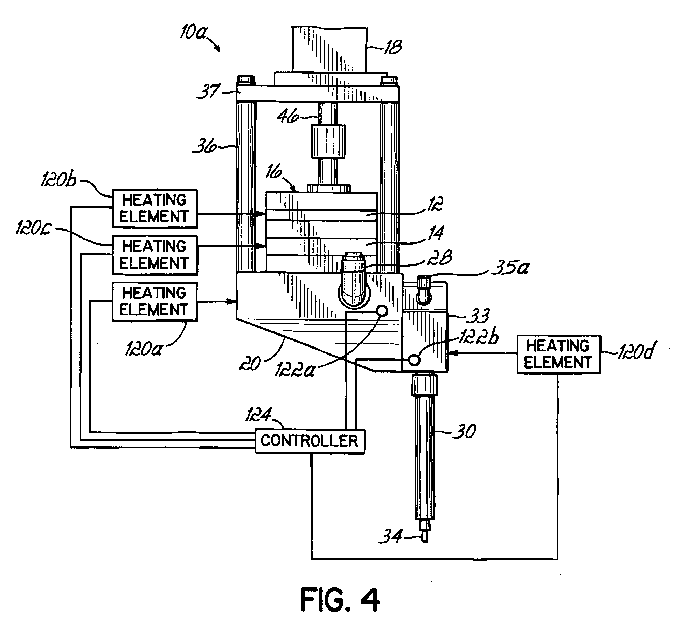

While the embodiments discussed herein have been described with respect to maintaining a desired volumetric flow ratio, it will be appreciated that a mass flow ratio of the dispensed components may also be obtained, provided the temperature of the components can be controlled. To this end, a pump assembly in accordance with the present disclosure may include heating and/or cooling devices to maintain the components of the two-part adhesive within predetermined temperature ranges. Such devices may include heaters and/or chillers operatively coupled to one or more of manifold 20, the first and second pumps 12, 14, 62, 64, 100, 102, and the gun 33. For example, FIG. 4 depicts an exemplary liquid dispensing system 10a, similar to liquid dispensing system 10 discussed above, wherein heating elements 120a, 120b, 120c, 120d are operatively associated with the manifold 20, first pump 12, second pump 14, and gun 33, respectively. Alternatively, the liquid metering system 10a may be fitted with a jacketing system for circulating heating and/or cooling fluid to one or more parts of the system 10a to maintain the terriperature of the adhesive components. Various other structure and methods may alternatively be used to control the temperature of the adhesive components within desired ranges.

The liquid metering system 10a may further include sensors 122a, 122b for sensing temperatures associated with the adhesive components, and communicating with a controller 124 operable to adjust the temperature of the adhesive components to maintain the desired temperature. With the temperature being controlled, a desired mass flow ratio can be obtained by considering the specific gravities of the adhesive components. For example, a roughly 1:1 mass flow ratio could be achieved by setting the ratio of case thickness h2/h1 equal to the ratio of specific gravity of the first component to the specific gravity of the second component.

## Claims

1. A metering system (10) for dispensing a two-part adhesive, comprising:
a first gear pump (12, 62, 100) for pumping a first component of the two-part adhesive, the first gear pump (12, 62, 100) having a first inlet (26, 74) for receiving the first component of the two-part adhesive and a first outlet (22, 70);
a second gear pump (14, 64, 102) for pumping a second component of the two-part adhesive, the second gear pump (14, 64, 102) having a second inlet (28, 76) for receiving the second component of the two-part adhesive and a second outlet (24, 72);
a manifold (20, 68, 106) communicating with the first outlet (22, 70) of the first gear pump (12, 62, 100) and the second outlet (24, 72) of the second gear pump (14, 64, 102), and having at least two manifold outlets (31, 32, 77, 79) for dispensing the first and second components of the two-part adhesive into a mixing device (30, 78); and
a motor (18, 66, 104) operatively coupled to the first and second gear pumps (12, 14, 62, 64, 100, 102) and driving the first and second gear pumps (12, 14, 62, 64, 100, 102) at a fixed speed ratio relative to one another,
**characterized in that** the first and second gear pumps (12, 14, 102) are supported adjacent to each other on the manifold (20, 68, 106) or are spaced apart and positioned on opposite sides of the manifold (20, 68, 106).

2. The metering system of claim 1, further comprising a static mixer in fluid communication with the manifold outlets.

3. The metering system of claim 1, wherein the first gear pump (12, 62, 100) comprises a first gear train operatively coupled to the motor (18) and having a first case thickness; the second gear pump (14, 64, 102) comprises a second gear train operatively coupled to the motor (18) and having a second case thickness; and a mass flow ratio between the pumps (12,14, 62, 64, 100, 102) is controlled by the ratio of the first case thickness to the second case thickness.

4. The metering system of claim 1, wherein first and second gear pumps (12, 14, 102) are supported adjacent to each other on the manifold (20, 68, 106), wherein the motor (18) is coupled to the first and second gear pumps (12, 14, 62, 64, 100, 102) by a belt.

5. The metering system of claim 1, wherein the first and second gear pumps (12, 14, 62, 64, 100, 102) further comprise a common driveshaft.

6. The metering system of claim 2, wherein the first and second gear pumps (12, 14, 62, 64, 100, 102) are configured to provide adhesive components to the static mixer at volumetric flow ratios of about 1:1 to about 10:1.

7. The metering system of claim 1, further comprising a heating element operatively coupled to at least one of the first gear pump (12, 62, 100), the second gear pump (14, 64, 102), or the manifold (20).

## Patentansprüche

1. Dosiersystem (10) zum Abgeben eines Zwei-Komponenten-Klebstoffs, mit:
einer ersten Zahnradpumpe (12, 62, 100) zum Pumpen einer ersten Komponente des Zwei-Komponenten-Klebstoffs, wobei die erste Zahnradpumpe (12, 62, 100) einen ersten Einlass (26, 74) zum Aufnehmen der ersten Komponente des Zwei-Komponenten-Klebstoffs und einen ersten Auslass (22, 70) aufweist;
einer zweiten Zahnradpumpe (14, 64, 102) zum Pumpen einer zweiten Komponente des Zwei-Komponenten-Klebstoffs, wobei die zweite Zahnradpumpe (14, 64, 102) einen zweiten Einlass (28, 76) zum Aufnehmen der zweiten Komponente des Zwei-Komponenten-Klebstoffs und einen zweiten Auslass (24, 72) aufweist;
einem Verteiler (20, 68, 106), welcher mit dem ersten Auslass (22, 70) der ersten Zahnradpumpe (12, 62, 100) und dem zweiten Auslass (24, 72) der zweiten Zahnradpumpe (14, 64, 102) kommuniziert und wenigstens zwei Verteilerauslässe (31, 32, 77, 79) zum Abgeben der ersten und zweiten Komponenten des Zwei-Komponenten-Klebstoffs in eine Mischeinrichtung (30, 78) aufweist; und
einem Motor (18, 66, 104), welcher wirkend mit den ersten und zweiten Zahnradpumpen (12, 14, 62, 64, 100, 102) gekoppelt ist und die ersten und zweiten Zahnradpumpen (12, 14, 62, 64, 100, 102) mit einem festen Geschwindigkeitsverhältnis relativ zueinander antreibt,
**dadurch gekennzeichnet, dass** die ersten und zweiten Zahnradpumpen (12, 14, 102) benachbart zueinander an dem Verteiler (20, 68, 100) gelagert oder voneinander beabstandet und an gegenüberliegenden Seiten des Verteilers (20, 68, 106) positioniert sind.

2. Dosiersystem nach Anspruch 1, ferner mit einem statischen Mixer, welcher fluidleitend mit den Verteilerauslässen kommuniziert.

3. Dosiersystem nach Anspruch 1, wobei die erste Zahnradpumpe (12, 62, 100) ein erstes Zahnradpaar aufweist, welches wirkend mit dem Motor (18) gekoppelt ist und eine erste Gehäusedicke aufweist; die zweite Zahnradpumpe (14, 64, 102) ein zweites Zahnradpaar aufweist, welches wirkend mit dem Motor (18) gekoppelt ist und eine zweite Gehäusedicke aufweist; und wobei ein Massenstromverhältnis zwischen den Pumpen (12, 14, 62, 64, 100, 102) durch das Verhältnis der ersten Gehäusedicke zu der zweiten Gehäusedicke gesteuert ist.

4. Dosiersystem nach Anspruch 1, wobei die ersten und zweiten Zahnradpumpen (12, 14, 102) benachbart zueinander an dem Verteiler (20, 68, 106) angeordnet sind, wobei der Motor (18) mit den ersten und zweiten Zahnradpumpen (12, 14, 62, 64, 100, 102) mittels eines Gurts gekoppelt ist.

5. Dosiersystem nach Anspruch 1, wobei die ersten und zweiten Zahnradpumpen (12, 14, 62, 64, 100, 102) ferner eine gemeinsame Antriebswelle aufweisen.

6. Dosiersystem nach Anspruch 2, wobei die ersten und zweiten Zahnradpumpen (12, 14, 62, 64, 100, 102) dazu eingerichtet sind, dem statischen Mixer Klebstoffkomponenten mit Volumenstromverhältnissen von etwa 1:1 bis etwa 10:1 bereitzustellen.

7. Dosiersystem nach Anspruch 1, ferner aufweisend ein Heizelement, welches mit wenigstens der ersten Zahnradpumpe (12, 62, 100), der zweiten Zahnradpumpe (14, 64, 102) oder dem Verteiler (20) wirkend gekoppelt ist.

## Revendications

1. Système de dosage (10) pour la distribution d'un adhésif à deux composants, comprenant :
une première pompe à engrenages (12, 62, 100) pour pomper un premier composant de l'adhésif à deux composants, la première pompe à engrenages (12, 62, 100) comportant une première entrée (26, 74) pour recevoir le premier composant de l'adhésif à deux composants, et une première sortie (22, 70) ;
une deuxième pompe à engrenages (14, 64, 102) pour pomper un deuxième composant de l'adhésif à deux composants, la deuxième pompe à engrenages (14, 64, 102) comportant une deuxième entrée (28, 76) pour recevoir le deuxième composant de l'adhésif à deux composants, et une deuxième sortie (24, 72) ;
un collecteur (20, 68, 108) communiquant avec la première sortie (22, 70) de la première pompe à engrenages (12, 62, 100) et la deuxième sortie (24, 72) de la deuxième pompe à engrenages (14, 64, 102) et comportant au moins deux sorties de collecteur (31, 32, 77, 79) pour distribuer les premier et deuxième composants de l'adhésif à deux composants dans un dispositif de mélange (30, 78) ; et
un moteur (18, 66, 104), accouplé en service aux première et deuxième pompes à engrenages (12, 14, 62, 64, 100, 102) et entraînant les première et deuxième pompes à engrenages (12, 14, 62, 64, 100, 102) à un rapport de vitesse mutuel fixe ;
**caractérisé en ce que** les première et deuxième pompes à engrenages (12, 14, 102) sont supportées l'une près de l'autre sur le collecteur (20, 68, 106) ou sont espacées et positionnées sur les côtés opposés du collecteur (20, 68, 106).

2. Système de dosage selon la revendication 1, comprenant en outre un mélangeur statique, en communication de fluide avec les sorties du collecteur.

3. Système de dosage selon la revendication 1, dans lequel la première pompe à engrenages (12, 62, 100) comprend un premier train d'engrenages, accouplé en service au moteur (18) et ayant une première épaisseur de carter ; la deuxième pompe à engrenages (14, 64, 102) comprenant un deuxième train d'engrenages, accouplé en service au moteur (18) et ayant une deuxième épaisseur de carter, un rapport de débit massique entre les pompes (12, 14, 62, 64, 100, 102) étant contrôlé par le rapport entre la première épaisseur de carter et la deuxième épaisseur de carter.

4. Système de dosage selon la revendication 1, dans lequel les première et deuxième pompes à engrenages (12, 14, 102) sont supportées l'une près de l'autre sur le collecteur (20, 68, 106), le moteur (18) étant accouplé aux première et deuxième pompes à engrenages (12, 14, 62, 64, 100, 102) par une courroie.

5. Système de dosage selon la revendication 1, dans lequel les première et deuxième pompes à engrenages (12, 14, 62, 64, 100, 102) comprennent en outre un arbre d'entraînement commun.

6. Système de dosage selon la revendication 2, dans lequel les première et deuxième pompes à engrenages (12, 14, 62, 64, 100, 102) sont configurées de sorte à fournir les composants de l'adhésif au mélangeur statique à des rapports de débit d'écoulement volumétrique compris entre environ 1 :1 et environ 10 :1.

7. Système de dosage selon la revendication 1, comprenant en outre un élément de chauffage, accouplé en service à au moins un élément, la première pompe à engrenages (12, 62, 100), la deuxième pompe à engrenages (14, 64, 102) ou le collecteur (20).
